# EUROPEAN PATENT APPLICATION

(11) **EP 4 410 094 A1**
(43) Date of publication of application: **07.08.2024**
(21) Application number: 24154951.8
(22) Date of filing: 31.01.2024
(51) Int. Cl.: A01G 9/22, A01G 13/02

(54) **SCREEN DEVICE WITH A CAVITY LAYER FOR A GREENHOUSE OR WAREHOUSE**

(30) Priority: 01.02.2023 NL 2034067
(71) Applicant: Van Der Valk Systemen B.V., 2681 LP Monster (NL)
(72) Inventor: Prins, Vincent, Monster (NL)
(74) Representative: Nederlandsch Octrooibureau

(57) **Abstract**

A screen device for a greenhouse is provided with two independently controllable screen cloths. The screen cloths are arranged substantially parallel to each other and spaced at a small distance from each other to form a cavity layer in between. The screen device is configured to facilitate arrangement of at least the first and second drive means outside of the cavity layer.

## Description

### Technical Field

The invention relates to a screen device for a greenhouse or warehouse. In particular, the invention relates to a screen device for a greenhouse configured to comprise at least two screen cloths arranged in parallel to each other and spaced at a small distance from each other to provide an insulating layer of air between them. Furthermore, the invention relates to a greenhouse or warehouse comprising such a screen device.

### Background Art

The application of screen devices in greenhouses is generally known. Screen devices can fulfil various different functions, for example controlling the amount and incidence of light, prevent light emissions, or controlling the climate in the greenhouse by isolating the cultivation space against heat loss or the entry of heat. For these purposes, different types of screen devices are known that each comprise one or multiple screen cloths. The screen cloths may be brought from a folded condition, i.e., an open position, to an unfolded condition, i.e., a closed position, to optimally control the conditions in the greenhouse.

An example of a greenhouse comprising a screen device is disclosed in patent document NL1029362 C2. The screen device is attached to a plurality of lattice girders that span an opening between horizontal support beams in a support structure in a greenhouse. The lattice girders each comprise an upper beam and a lower beam to which the screen device can be attached. A screen cloth is configured to unfold between the upper beams or lower beams, whereas a drive assembly to fold and/or unfold is provided just below the beams. Typically, the screen device is engaged to the upper beams as this maximizes the volume below the screen cloth and thereby provides more stable growth conditions in the cultivation space.

A specific type of screen device is described in patent document NL1040632C2. The screen device comprises two screen cloths that are arranged parallel to and at a small distance from each otherto provide a cavity layerthat has an insulating function. A stagnant air layer between the two screen cloths can prevent the entry of heat into the cultivation space during the day and/or heat loss from the cultivation space during the night. The screen device is provided with common drive means that simultaneously move the first and second screen cloths from the open to the closed position or vice versa.

To provide more flexibility in controlling the conditions in the cultivation space, technologically advanced greenhouses may comprise a second and/or third screen device attached to the lower beam of the lattice girder and/or to the lattices themselves. Although the application of multiple screen devices, each provided with one or more screen cloths, improves the flexibility to control the light and/or climate conditions in the cultivation space, the presence of multiple devices also requires more space and doubles the purchase costs.

It would be advantageous to provide an improved screen device that addresses some of the disadvantages mentioned above.

### Summary of Invention

Therefore, according to a first aspect of the invention, there is provided a screen device for a greenhouse or warehouse, wherein the screen device is configured to house at least a first screen cloth and a second screen cloth, wherein in an unfolded condition the first screen cloth is arranged substantially parallel to the second screen cloth and spaced at a small distance from the second screen cloth to form a cavity layer between the first and second screen cloth. The screen device comprises a first drive assembly comprising a first drive means and configured to drive the folding and unfolding of the first screen cloth; and a second drive assembly comprising a second drive means and configured to drive the folding and unfolding of the second screen cloth independently of the first screen cloth, wherein the screen device is configured to facilitate arrangement of at least the first and second drive means outside of the cavity layer.

In this context, the term "drive means" is understood to include any kind of conventional system to drive the folding and unfolding of the screen cloths, including but not limited to the use of a drive cable that is guided in a circuit through the greenhouse or warehouse using a plurality of wheels, pulleys or guides to guide it around; a drive cable that is configured to be rolled onto a cable spool, or a push-pull system comprising elongate elements such as rods that are translated along their longitudinal direction to drive the folding and unfolding of the screen cloths.

Advantageously, a cavity layer is provided and the second screen cloth can be folded and unfolded independently of the first screen cloth. This increases the flexibility of the screen device in comparison to screen devices that either have only one screen cloth, or that have multiple screen cloths that are configured to be opened and closed simultaneously. Moreover, the cavity layer provides insulation due to a stagnant layer of air in between the two screen cloths.

For the sake of clarity, the following directions are used. A longitudinal direction is defined as the direction wherein the screen cloths unfold. Both screen cloths are typically fixed along one side to a support structure and configured to unfold by moving another side of the screen cloth opposite to that side along the longitudinal direction. A transverse direction is defined perpendicular to the longitudinal direction and extending in a substantially horizontal plane. Finally, the first and second screen cloth are spaced from each other over a small distance in a vertical direction perpendicular to the substantially horizontal plane to form the cavity layer.

In this context, "a small distance" is defined as a distance between the screen cloths that is suitable to create a cavity layer. In particular, in existing greenhouses that comprise multiple screen devices attached to both the upper and lower beams of a lattice girder, the distance is too large for creating a cavity layer since the upper beam and lower beam of a lattice girder are typically spaced approximately 40 cm apart. Practice shows that such a distance is too large to provide the advantages of a cavity layer.

Therefore in an embodiment, the distance between the first screen cloth and the second screen cloth is at most 10 cm. It will be understood by the skilled person that the optimal thickness of the cavity layer may be dependent on the specific conditions wherein the screen device is applied. However, in most applications the distance between the first screen cloth and second screen cloth is preferably between 3 and 7 cm and approximately 5 cm.

In an embodiment, the distance between the first screen cloth and the second screen cloth is at least 2 cm, preferably at least 3 cm. The distance between the first screen cloth and the second screen cloth determines the thickness of the cavity layer. It will be understood by the skilled person that a thicker cavity layer provides better isolation than a thinner one. Nevertheless, since the cavity layer is not entirely enclosed by the screen device, some air circulation may still take place. Such air circulation is more likely to take place in a thicker cavity layer.

The drive means typically require too much space to be provided within the cavity layer. The screen device is therefore configured to facilitate the arrangement of the first and second drive means outside of the cavity layer. This can be done in various ways, wherein the drive means are either arranged below or above the two screen cloths. Both drive means may be arranged on the same or on different sides of the screen cloths.

In an embodiment, the screen device further comprises a bridging element that connects the first screen cloth to the first drive assembly, the bridging element extending through the cavity layer such that both the first drive means and the second drive means can be provided on the same side of the cavity layer. The bridging element is provided to enable that the drive assemblies of both the first and second screen cloth can be provided outside of the cavity layer. As such, the distance between the first and the second screen cloth can be kept relatively small, which enables the creation of the cavity layer. The available space in the cavity layer is typically insufficient to provide a full drive assembly including the drive means within the cavity layer.

In an embodiment, both the first drive assembly and the second drive assembly are provided below the cavity layer and below the first and second screen cloths. Typically, the screen device is mounted to an upper beam of a lattice girder. Directly above the upper beam, a ventilation mechanism of the greenhouse or warehouse may be provided. As such, the drive assemblies are preferably arranged below the two screen cloths.

In an embodiment, the first drive means and second drive means are arranged at essentially the same height.. The first drive means and second drive means are typically spaced from each other along the transverse direction. Advantageously, the screen device may remain relatively compact.

In an embodiment, the first and/or second drive means are first and/or second drive cables. It will be understood that preferably both screen cloths are driven using a similar mechanism. Nevertheless in embodiments, the first drive assembly and second drive assembly may also comprise different drive means.

In an embodiment, the first drive means are arranged to drive the folding and unfolding of the first screen cloth from above. Advantageously, no bridging element is required. In such embodiments, the first drive means typically is a first drive cable if the screen device is intended for connection to the upper beam of the lattice girder. The space that is available above the upper beam is usually very limited as a window operating mechanism is typically provided directly above the lattice girder.

In an embodiment, the first screen cloth is made of a different material and/or intended for a different purpose than the second screen cloth. The use of different screen cloths enhances the flexibility to optimally control the conditions in the cultivation zone. Examples of suitable screen cloths include but are not limited to energy screens, shadow screens and/or total darkening screens. In embodiments, the screen cloths may also both be of the same type. For example, two energy screens with a cavity layer in between may be used to provide a better isolation than a single energy screen or two energy screens that are spaced further apart.

In an embodiment, the first screen cloth is arranged above the second screen cloth. The first screen cloth is an energy screen configured to maintain heat within the greenhouse or warehouse. An energy screen reflects far infrared radiation and therefore reflects mostly heat. Energy screens are typically applied to prevent loss of heat at night. In a further embodiment, the energy screen is transparent. This allows sunlight to pass through the first cloth and enables closure of the screen also during the day.

In an embodiment, the first screen cloth is arranged above the second screen cloth and the second screen cloth is a totally darkening cloth configured to reflect sun light. The use of a totally darkening cloth as second screen cloth enables the regulation of day length.

In an embodiment, the first screen cloth and/or the second screen cloth are air impermeable. In this context the term "impermeable" is considered to be interpreted in the context of being sufficiently impermeable for a stagnant air layer to be formed between the first and second screen cloth. It will be understood that in embodiments also a partially air permeable screen cloth may be provided, nevertheless it will also be understood that the resulting cavity layer may have a reduced insulating effect.

In an embodiment, the screen device further comprises a first wire bed comprising a plurality of tensioning wires arranged in the greenhouse at a first level, wherein the first screen cloth is configured to be folded or unfolded by the first drive assembly by moving at least one end of the first screen cloth along the first wire bed, and a second wire bed comprising a plurality of tensioning wires arranged in the greenhouse at a second level different from the first level, wherein the second screen cloth is configured to be folded or unfolded by the second drive assembly by moving at least one end of the second screen cloth along the second wire bed.

Each wire bed comprises a plurality of tension wires that are typically arranged substantially parallel to each other and spaced from each other along the transverse direction. The wire bed may further comprise fastening elements to fasten the plurality of tension wires to a support structure. Typically, the first screen cloth is supported from below by the first wire bed, whereas the second screen cloth is supported from below by the second wire bed. However, the skilled person will understand that many other arrangements are also possible, for example, wherein the first screen cloth and/or the second screen cloth are hanging from either one of the wire beds. Advantageously, the installation of the screen device is less complex when both screen cloths are guided along a different wire bed and/or supported from below by a wire bed instead of hanging.

In an embodiment, the first wire bed is a first lower wire bed, and the screen device further comprises a first upper wire bed comprising a plurality of tensioning wires arranged in the greenhouse above the first level, wherein the first upper wire bed serves to prevent the first screen cloth from blowing upwards. Providing a screen cloth between two wire beds ensures that the screen cloth stays in position after unfolding it.

In an embodiment, the second wire bed is a second lower wire bed and wherein the screen device further comprises a second upper wire bed comprising a plurality of tensioning wires arranged in the greenhouse and within the cavity layer, wherein the second upper wire bed serves to prevent the screen cloth from blowing upwards. Providing a screen cloth between two wire beds ensures that the screen cloth stays in position after unfolding it.

In an embodiment, the first lower wire bed is arranged to prevent the second screen cloth from blowing upwards. As an alternative to a second upper wire bed, the first lower wire bed may function as a wire bed that keeps the second screen cloth in position after unfolding it.

In an embodiment, the screen device further comprises an elongate screen profile, wherein a proximal edge of the first screen cloth is configured to be connected to the elongate screen profile over the full length of the proximal edge and wherein the bridging element interconnects the screen profile and the first drive assembly. An example of a screen profile is for instance provided in patent NL2002320C2. The skilled person will understand that a screen profile has a certain required stiffness to avoid bending. Advantageous to the provision of an elongate screen profile and a separate bridging element is that the bridging element does not need to extend over the full length of the side of the screen cloth. This leads to a reduction of the overall weight of the screen device, and a reduction of material expenses.

In an embodiment, the bridging element is fixed to the screen profile using fastening means. Suitable fastening means include but are not limited to screws, pins, nails, or bolts. The bridging element is fixed to the screen profile. Typically, the bridging element is fastened to the screen profile in situ to avoid misalignments with the first drive means of the first drive assembly.

In an embodiment, the bridging element is moveable with respect to the screen profile along the longitudinal direction of the screen profile. In this context, a longitudinal direction of the screen profile typically coincides with a transverse direction of the overall screen device. Relative mobility between the bridging element and screen profile is advantageous for the installation of the screen device, as the bridging element may be moved to align the bridging element with the first drive means.

In an embodiment, the screen device comprises a coupling member configured to rigidly connect the first drive means to the bridging element. By providing the bridging element, the position wherein the drive assembly acts upon the first screen cloth is spaced along a vertical axis. Consequently, a force couple results which needs to be absorbed within the system. The bridging element may be designed to incorporate such moments, yet preferably a coupling member specifically designed for this purpose may be applied that provides a rigid connection between the drive means and the bridging element.

In an embodiment, the bridging element has a channel with a channel opening that has the same width as the channel opening of the screen profile. Advantageously, other components of the screen assembly can be fastened to the bridging element instead of to the screen profile without adaptation.

In an embodiment, the bridging element comprises a guiding portion for guiding the second screen cloth during folding. The guiding portion can be used to guide the unfolding of a second screen cloth if the screen assembly is configured to simultaneously fold both screen cloths.

According to a second aspect of the invention, and in accordance with the advantages and effects described herein above, there is provided a greenhouse or warehouse comprising a screen device according to the invention. In embodiments, the greenhouse or warehouse may further comprise a second screen device according to the invention, or a screen device of a different type. A plurality of screen devices further improves the possibility to optimally control the climate and light.

In an embodiment, the screen device is mounted to the upper beam of a lattice girder. Advantageously, the volume below the screen cloths is larger than when the screen device would be mounted to the lower beam. Typically, both the first and second drive means are provided below the screen cloths to avoid interference with other assemblies and mechanisms above the lattice girder.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1A schematically shows top perspective view of a support structure with a screen device according to a first embodiment of the invention.
Figure 1B shows a bottom view of the support structure with screen device in Fig. 1A.
Figure 1C shows a first cross-sectional side view of the support structure with screen device as indicated in Figure 1B.
Figure 1D shows a detail of the screen device as indicated in Fig. 1C.
Figure 1E shows a second cross-sectional side view of the support structure with screen device as indicated in Figure 1B.
Figures 2A-2B illustrate two different configurations of the screen device in Fig. 1A-1E during use.

The figures are meant for illustrative purposes only, and do not serve as restriction of the scope or the protection as laid down by the claims.

### Description of Embodiments

The following is a description of certain embodiments of the invention, given by way of example only and with reference to the figures.

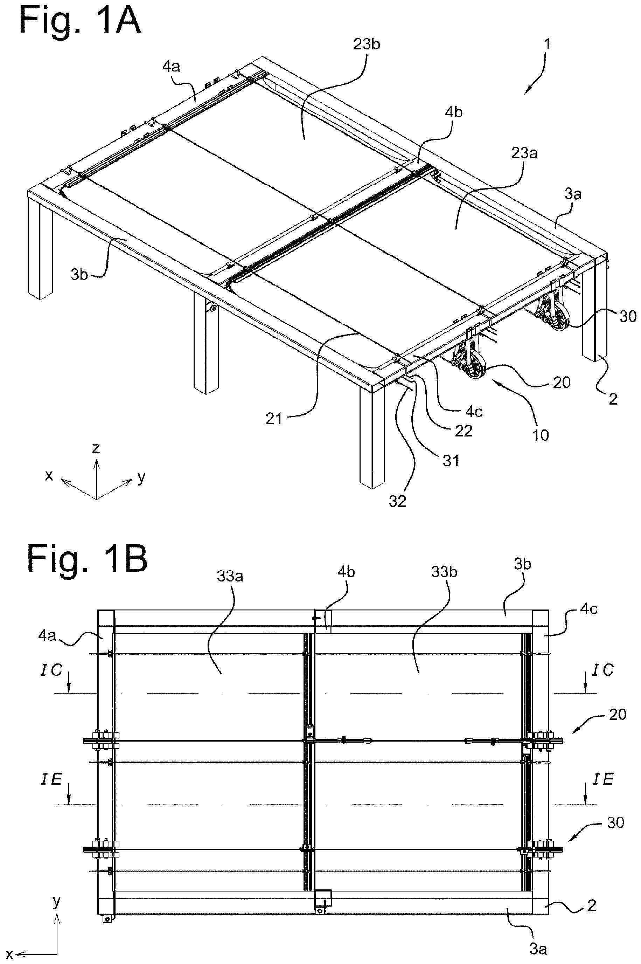

Figure 1A schematically shows a top perspective view of a support structure 1 comprising a screen device 10. The support structure 1 with screen device 10 can for example be provided within a greenhouse, yet may alternatively also be applied in another type of building such as a warehouse.

The support structure 1 comprises a plurality of columns 2, horizontal support beams 3a, 3b, and girders 4a, 4b, 4c. The horizontal support beams 3 are arranged parallel to each other and supported by the plurality of columns 2. The girders 4a, 4b, 4c span the openings between adjacent horizontal support beams 3. In the depicted embodiment, the girders 4a, 4b, 4c are rectangular beams. However, it will be understood by the skilled person that alternatively other types of girders 4a, 4b, 4c may be used. Typically, in greenhouses, lattice girders are applied and screen devices are mounted to either the lower beam or upper beam of the lattice girder. In such embodiments, a second screen device according to the invention or a conventional screen device may be mounted to the other of the lower beam or upper beam to provide multiple devices in a single greenhouse or warehouse.

The screen device 10 comprises a plurality of first screen cloths 23a, 23b, second screen cloths 33a, 33b (see Fig. 1B), a first drive assembly 20 and a second drive assembly 30. The screen device 10 further comprises a plurality of wire beds 21, 22, 31, 32. The transverse direction Y is defined perpendicular to a longitudinal direction X. The longitudinal direction X is defined as the direction wherein the first and second screen cloths 23a,23b,33a,33b fold and unfold. A vertical axis Z is defined perpendicular to the planes wherein the first and second screen cloths 23a, 23b, 33a, 33b are configured to extend after unfolding.

Each wire bed 21, 22, 31, 32 is defined by a plurality of tensioning wires that, per wire bed, are all arranged at essentially the same vertical level and parallel to each other, yet spaced from each other along a transverse direction Y. The tensioning wires are arranged to facilitate the folding and unfolding of the screen cloths between two vertically adjacent wire beds 21-22, 31-32. The four different wire beds 21, 22, 31, 32 are each arranged at a different vertical level Z.

The first screen cloths 23a, 23b extend between the horizontal support beams 3. Each first screen cloth 23a, 23b is configured to cover a rectangular space formed by two adjacent support beams 3a, 3b intersecting a pair of two adjacent girders 4a-4b, 4b-4c when it is closed, i.e., unfolded. The first drive assembly 20 is configured to simultaneously fold and/or unfold both first screen cloths 23a, 23b between the first upper wire bed 21 and first lower wire bed 22. However, it will be understood by the skilled person that in alternative embodiments also only a single first screen cloth may be provided and/or more than two first screen cloths that can be folded and unfolded using one first drive assembly 20. Since the first screen cloths 23a, 23b, are unfolded above the second screen cloths 33a,33b, the second screen cloths are not visible in Figure 1A.

Figure 1B shows a bottom view of the support structure 1 with screen device 10 in Fig. 1A. A so-called double closed configuration is shown, i.e., a configuration wherein both the first screen cloths 23a, 23b and second screen cloths 33a, 33b are closed. Below the second screen cloths 33a, 33b, the first drive assembly 20 and second drive assembly 30 are visible. Advantageously, the inclusion of two separate drive assemblies 20, 30 enables the independent opening and closure of the first and second screen cloths 23a, 23b , 33a, 33b.

The first screen cloth 23a, 23b is a transparent energy screen. An energy screen mainly reflects far infrared radiation, which is associated with heat. Due to its transparency light may pass through.

The second screen cloth 33a, 33b is a totally darkening screen and can be opened and closed to influence the day length in the greenhouse. The screen cloths will typically both be closed during the evening and/or night, to simulate night time by keeping out light but keeping in the heat. During the desired day time, the second screen cloth 33a, 33b may be opened to enable the passage of light. The energy screen may both be opened and/or closed dependent on the desired conditions in the cultivation zone.

Advantageous to the device 10 is that both drive assemblies 20,30 are provided below the screen cloths 23a, 23b,33a, 33b. Consequently, the space above the girders 4a-4b is entirely free, allowing the arrangement of other assemblies or devices of the greenhouse directly above. In particular, a window operating mechanism may be provided directly above the girder.

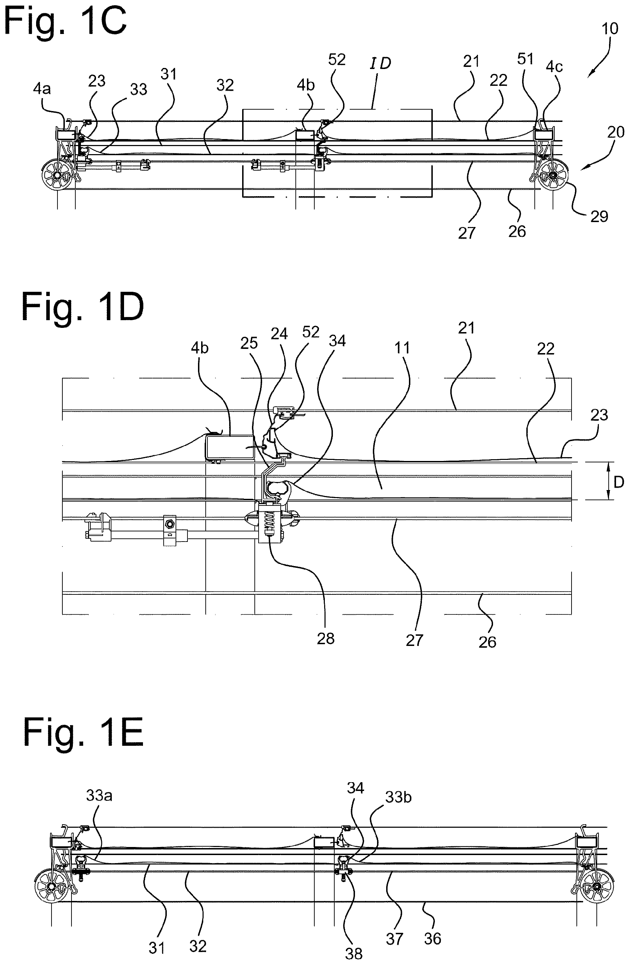

Figure 1C shows a cross-sectional side view of the support structure 1 with a screen device 10 as indicated in Fig. 1B. Figure 1D shows a detail of Figure 1C. As Figure 1D illustrates, in the double closed configuration the first screen cloth 23a, 23b and second screen cloth 33a, 33b are arranged parallel to each other and spaced from each other over a small distance. This small distance is approximately the distance D, defined as the distance between the first lower wire bed 22 that supports the first screen cloth 23a, 23b from below, and the second lower wire bed 32 that supports the second screen cloth 33a, 33b from below. The distance is 47 mm and consequently the distance between the first screen cloth 23a, 23b and the second screen cloth 33a, 33b when in the double closed configuration, is also approximately 47 mm. In the double closed configuration, a cavity layer 11 is formed between the first screen cloths 23a, 23b and second screen cloths 33a, 33b.

The operation of folding and unfolding the first screen cloth 23a, 23b is discussed with reference to Fig. 1C and 1D. The screen device 10 is provided with the first drive assembly 20 comprising a drive cable 27, return cable 26, and a plurality of guides 29. The screen device 10 further comprises the first upper wire bed 21, the first lower wire bed 22, a first screen profile 24, a bridging element 25, and a coupling member 28 for coupling the first screen cloth 23a, 23b to the drive assembly 20.

The first screen cloth 23 comprises a proximal edge 52 and a distal edge 51. The distal edge 51 is rigidly connected to one of the girders 4b,4c, whereas the proximal edge 52 is connected to the first screen profile 24. The drive assembly 20 drives the movement of the first screen profile 24 along the longitudinal axis X, and is thereby configured to fold and/or unfold the screen cloth 23.

The first screen cloth 23 is folded and unfolded between the first upper wire bed 21 and the first lower wire bed 22. The first lower wire bed 22 supports the first screen cloths 23a, 23b from below, whereas the first upper wire bed 21 prevents the first screen cloth 23a, 23b from blowing upwards.

Typically, the drive assembly 20 is arranged directly below the screen cloth 23 in conventional screen devices. However, due to the presence of the second screen cloth 33a, 33b just below the screen cloth 23 in order to form a cavity layer, this is not possible. To that end, the screen device 10 comprises the bridging element 25 that extends through the cavity layer and allows the connection of the screen profile 24 to the first drive assembly 20 that is provided outside of the cavity layer.

The bridging element 25 is fastened to the screen profile 24 and connects the screen profile 24 to the drive cable 27 through the coupling member 28. The bridging element 25 is configured to be engaged in an elongate channel 41 in a lower surface of the screen profile 24. In the depicted embodiment, the bridging element 25 cannot be moved along the elongate channel 41, but in alternative embodiments a moveability of the bridging element 25 with respect to the screen profile 24 may be provided to enable an easy alignment when connecting the bridging element 25 to the drive cable 27.

The first drive assembly 20 comprises a drive motor that drives the drive cable 27 and return cable 26 around a plurality of guides 29. It will be understood that the drive cable 27 and return cable 26 are essentially the same cable and that portions of said cable may function as the drive cable 27 and the return cable 26 dependent on the position of the screen profile 24 with screen cloth 23a, 23b. Although the return cable 26 is here depicted as a cable portion that runs essentially parallel to the drive cable 27, this is not necessarily the case. In embodiments, the return cable 26 may be guided throughout the entire greenhouse or warehouse, or no return cable 26 may be provided as the cable is rolled onto a spool. In this context, when it is stated that the drive means are provided outside of the cavity layer, or on a particular side of the screen cloths 23a, 23b,33a, 33b, then this is intended to refer to the position of at least the drive cable 27.

Fig. 1E shows another cross-sectional side view of the support structure 1 with a screen device 10 as indicated in Fig. 1B. To facilitate the folding and unfolding of the second screen cloth parts 33a, 33b, the screen device 10 further comprises the second drive assembly 30, a second upper wire bed 31, a second lower wire bed 32, a second screen profile 34, and a second coupling member 38. The second drive assembly 30 comprises a second drive motor for driving a second drive cable 37 and return cable 36 independently of the first drive and return cables 26,27. The second lower wire bed 32 supports the second screen cloths 33a, 33b from below, whereas the second upper wire bed 31 prevents the second screen cloths 33a, 33b from blowing upwards.

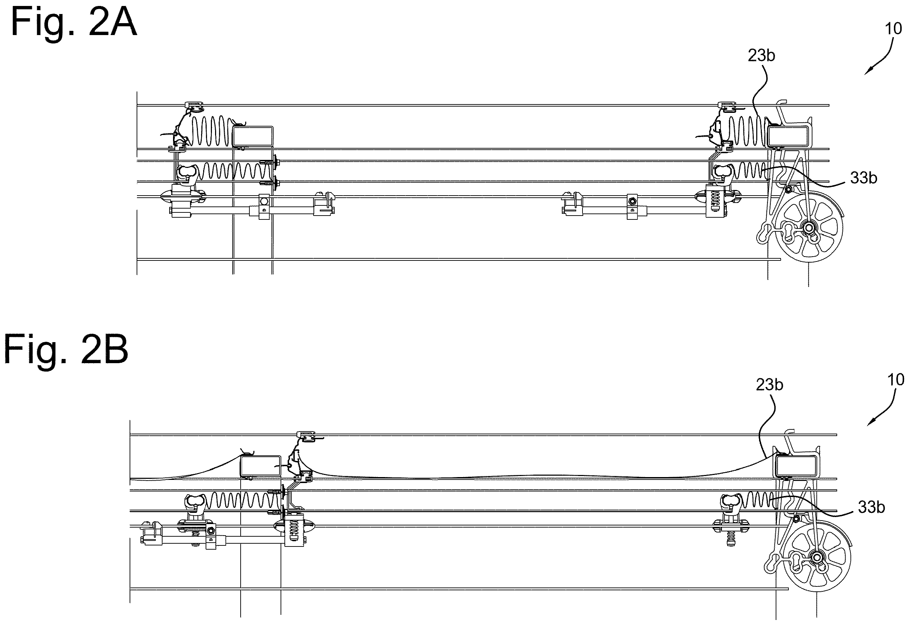

Advantageous to the screen device 10 is that the cavity layer 11 can be created when both screen cloths 23a, 23b, 33a, 33b are closed. Fig. 1A-1E show the screen device 10 in the double closed configuration. Figures 2A-2B illustrate two different configurations of the screen device 10 during use. Fig. 2A shows a side view with both the first screen cloth and second screen cloth in an open or folded condition. In Fig. 2B the first screen cloth is unfolded, whereas the second screen cloth is still open. It will be understood that since the bridging element extends through the cavity layer, the second screen cloth may only be closed when the first screen cloth is also closed.

The present invention may be embodied in other specific forms without departing from its essential characteristics. The described embodiments are to be considered in all respects only as illustrative and not restrictive to the inventive concept. The scope of the invention is, therefore, indicated by the appended claims rather than by the foregoing description. It will be apparent to the person skilled in the art that alternative and equivalent embodiments of the invention can be conceived and reduced to practice. In addition, many modifications may be made to adapt a particular configuration or material to the teachings of the invention without departing from the essential scope thereof.

All modifications which come within the meaning and range of equivalency of the claims are to be embraced within their scope.

## Claims

1. A screen device for a greenhouse or warehouse, the screen device configured to house at least a first screen cloth and a second screen cloth, wherein in an unfolded condition the first screen cloth is arranged substantially parallel to the second screen cloth and spaced at a small distance from the second screen cloth to form a cavity layer between the first and second screen cloth, the screen device comprising:
a first drive assembly comprising a first drive means and configured to drive the folding and unfolding of the first screen cloth; and
a second drive assembly comprising a second drive means and configured to drive the folding and unfolding of the second screen cloth independently of the first screen cloth,
wherein the screen device is configured to facilitate arrangement of at least the first and second drive means outside of the cavity layer.

2. The screen device according to claim 1 further comprising a bridging element that connects the first screen cloth to the first drive assembly, the bridging element extending through the cavity layer such that both the first drive means and the second drive means can be provided on the same side of the cavity layer.

3. The screen device according to claim 1 or 2 wherein the distance between the first screen cloth and the second screen cloth is at least 2 cm, preferably at least 3 cm.

4. The screen device according to any of the preceding claims wherein the distance between the first screen cloth and the second screen cloth is at most 10 cm.

5. The screen device according to any of the preceding claims wherein both the first drive assembly and the second drive assembly are provided below the cavity layer and below the first and second screen cloths.

6. The screen device according to any of the preceding claims wherein the first drive means and second drive means are arranged at essentially the same height.

7. The screen device according to any of the preceding claims wherein the first and second drive means are first and second drive cables.

8. The screen device according to any of the preceding claims, wherein the first screen cloth is made of a different material and/or intended for a different purpose than the second screen cloth, optionally wherein the first screen cloth is arranged above the second screen cloth and wherein the first screen cloth is an energy screen configured to maintain heat within the greenhouse or warehouse and/or wherein the second screen cloth is a totally darkening cloth configured to reflect sun light.

9. The screen device according to any of the preceding claims wherein the first screen cloth and/or the second screen cloth are air impermeable.

10. The screen device according to any of the preceding claims further comprising:
a first wire bed comprising a plurality of tensioning wires arranged in the greenhouse or warehouse at a first level, wherein the first screen cloth is configured to be folded or unfolded by the first drive assembly by moving at least one end of the first screen cloth along the first wire bed, and
a second wire bed comprising a plurality of tensioning wires arranged in the greenhouse at a second level different from the first level, wherein the second screen cloth is configured to be folded or unfolded by the second drive assembly by moving at least one end of the second screen cloth along the second wire bed.

11. The screen device according to claim 10, wherein the first wire bed is a first lower wire bed, and wherein the screen device further comprises a first upper wire bed comprising a plurality of tensioning wires arranged in the greenhouse or warehouse above the first level, wherein the first upper wire bed serves to prevent the first screen cloth from blowing upwards, optionally wherein the first lower wire bed is arranged to prevent the second screen cloth from blowing upwards.

12. The screen device according to any of claims 11, wherein the second wire bed is a second lower wire bed and wherein the screen device further comprises a second upper wire bed comprising a plurality of tensioning wires arranged in the greenhouse or warehouse and within the cavity layer, wherein the second upper wire bed serves to prevent the screen cloth from blowing upwards.

13. The screen device according to any of the preceding claims as long as dependent on claim 2 and further comprising an elongate screen profile wherein a proximal edge of the first screen cloth is configured to be connected to the elongate screen profile over the full length of the proximal edge and wherein the bridging element interconnects the screen profile and the first drive assembly.

14. The screen device according to any of the preceding claims as long as dependent on claim 2 and further comprising a coupling member configured to rigidly connect the first drive means to the bridging element and absorb the forces that results when folding or unfolding the first screen cloth.

15. A greenhouse or warehouse comprising a screen device according to any of the preceding claims.
